# EUROPÄISCHE PATENTANMELDUNG

(11) **EP 3 695 949 A1**
(43) Veröffentlichungstag der Anmeldung: **19.08.2020**
(21) Anmeldenummer: 20156110.7
(22) Anmeldetag: 07.02.2020
(51) Int. Cl.: B29C 45/14

(54) **VERFAHREN ZUM HERSTELLEN EINER SITZSCHALE FÜR EINEN SITZSTUHL**

(30) Priorität: 18.02.2019 DE 102019202148
(71) Anmelder: Interstuhl Büromöbel GmbH & Co. KG, 72469 Messstetten (DE)
(72) Erfinder: Link, Joachim, 72468 Meßstetten-Tieringen (DE)
(74) Vertreter: BRP Renaud & Partner mbB Rechtsanwälte Patentanwälte Steuerberater

(57) **Zusammenfassung**

Die Erfindung betrifft ein Verfahren zum Herstellen einer Sitzschale (12) für einen Stuhl (10), umfassend drei Verfahrensschritte a) bis c). Gemäß einem ersten Schritt a) wird ein Träger (1) aus einem Kunststoffmaterial (K) bereitgestellt, auf dessen Vorderseite (3) eine Kunststoff-Folie (2) angeordnet ist. Gemäß einem zweiten Schritt b) wird der Träger (1) mit der Kunststoff-Folie (2) mittels eines Tiefziehwerkzeugs derart tiefgezogen, dass die Vorderseite (3) des Trägers (1) mit der Kunststoff-Folie nach dem Tiefziehen eine vorgegebene dreidimensionale Oberflächenkontur (4a) aufweist. Gemäß einem dritten Schritt c) wird eine Rückseite (7) des Trägers (1) mit einem Kunststoffmaterial (K') umspritzt.

## Beschreibung

Die Erfindung betrifft ein Verfahren zum Herstellen einer Sitzschale für einen Sitzstuhl sowie eine solche Sitzschale. Ferner betrifft die Erfindung einen Stuhl mit einer solchen Sitzschale, die insbesondere mittels dieses Verfahrens hergestellt ist.

Moderne Sitzschalen für Stühle werden oberseitig oftmals mit einer dekorierten Folie aus Kunststoff versehen, um auf diese Weise die Oberseite der Sitzschale optisch individuell und für einen Betrachter besonders ansprechend gestalten zu können. Typischerweise werden solche Sitzschalen aus Kunststoff im Spritzverfahren hergestellt. Der Begriff "Sitzschale" ist im vorliegenden Zusammenhang weit gefasst und umfasst nicht nur rein schalenartige Geometrien, sondern auch Sitzflächen mit anderen, für einen Stuhl geeigneten Geometrien.

Als problematisch erweist sich die Herstellung solcher Sitzschalen, wenn diese mit besagten Kunststoff-Folien ausgestattet werden sollen, da die Sitzschalen typischerweise eine gekrümmte Oberflächenkontur besitzen. Oftmals sind die Oberflächenkonturen der Sitzschale sogar "zweifach" gekrümmt, was bedeutet, dass eine Krümmung der Oberflächenkontur nicht nur in einer einzigen Richtung, sondern sogar in zwei sich zueinander senkrecht erstreckenden Richtungen vorhanden ist.

Es ist daher eine Aufgabe der vorliegenden Erfindung, ein verbessertes Herstellungsverfahren für eine Sitzschale eines Stuhls zu schaffen. Eine weitere Aufgabe der vorliegenden Erfindung besteht darin, eine solche Sitzschale zu schaffen.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, eine dekorativ ausgestaltete Kunststoff-Folie zur Verwendung auf einer Sitzschale für einen Stuhl zunächst auf einem - relativ dünnwandigen - Träger aus einem Kunststoffmaterial anzuordnen, danach den Träger mit der Kunststoff-Folie in die gewünschte geometrische Formgebung tiefzuziehen und anschließend den Träger zur Ausbildung der eigentlichen Sitzschale mit einem Kunststoff zu umspritzen.

Die erfindungswesentliche Verwendung eines Trägers, auf welchem die Kunststoff-Folie vor dem Tiefziehen und dem sich daran anschließenden Anspritzen von Kunststoffmaterial platziert und befestigt wird, erlaubt die Herstellung von Sitzschale mit vielfältigen unterschiedlichen Oberflächenkonturen und Oberflächenkrümmungen. Dabei kann die Oberseite der Sitzschale, welche sowohl eine Sitzfläche als auch eine Rückenlehne des Stuhls ausbilden kann, durch die dekorative Kunststoff-Folie verschönert werden, was die Wertigkeit der Sitzschale und somit des gesamten die Sitzschale verwendenden Stuhls erhöht.

Ein erfindungsgemäßes Verfahren zum Herstellen einer Sitzschale für einen Stuhl umfasst die im Folgenden erläuterten Schritte a) bis c): Gemäß einem ersten Schritt a) wird ein Träger aus einem Kunststoffmaterial bereitgestellt, auf dessen Vorderseite eine Kunststoff-Folie angeordnet ist. Gemäß einem zweiten Verfahrensschritt b) wird der Trägers mit der Kunststoff-Folie mittels eines Tiefziehwerkzeugs tiefgezogen, so dass die Vorderseite des Trägers mit der Kunststoff-Folie nach dem Tiefziehen eine vorgegebene dreidimensionale Oberflächenkontur aufweist. In einem dritten Verfahrensschritt c) wird die Rückseite des Trägers mit einem Kunststoffmaterial umspritzt. Auf diese Weise wird ein Schalenkörper ausgebildet, welcher den Träger mit der Kunststoff-Folie soweit aussteift, dass die aus dem Träger mit der Kunststoff-Folie und dem Schalenkörper gebildete Sitzschale hinreichend stabil ist, um ohne weitere Maßnahmen zur Stabilisierung in einem Stuhl verbaut werden zu können.
Bei einer vorteilhaften Weiterbildung des Verfahrens erfolgt das Umspritzen in Schritt c) mittels eines Monosandwich-Verfahrens. Dies hat vorteilhaft zur Folge, dass eine Menge an einem die Sichtflächen der Sitzschale abseits der Kunststoff-Folie bildenden und eine ansprechende Optik bietenden Kunststoff eingespart werden kann, ohne dabei eine Festigkeit der Sitzschale sowie eine Herstellungszeit der Sitzschale zu verschlechtern.

Eine weitere bevorzugte Weiterbildung des Verfahrens sieht vor, dass bei dem Monosandwich-Verfahren, mittels welchem die Rückseite des Trägers im Schritt c) mit dem Kunststoffmaterial umspritzt wird, zuerst eine Kernkomponente in einer Spritzeinheit eines Spritzwerkzeugs plastifiziert wird. Anschließend wird eine Hautkomponente mittels eines Nebenextruders in einen Schneckenvorraum der Spritzeinheit dosiert. Dabei werden die im Zylinder befindlichen Materialien nicht vermischt, sondern lagern räumlich hintereinander im Schneckenvorraum, sodass beim Einspritzen die beiden Materialien zwangsläufig nacheinander in die Kavität fließen, sodass sich die zuerst einfließende Kunststoff-Komponente als Haut-Komponente an die Rückseite des Trägers anlegt und die nachfolgende Kunststoff-Komponente den Kern eines Schalenkörpers bildet. Vorteilhaft lässt sich so besonders einfach ein sandwichartiger Aufbau der Sitzschale erreichen.

Zweckmäßig wird bei dem Monosandwich-Verfahren, mittels welchem die Rückseite des Trägers im Schritt c) mit dem Kunststoffmaterial umspritzt wird, das Spritzwerkzeug mit einer Standard-Spritzgießmaschine mit dem Nebenextruder in vertikaler oder horizontaler Anordnung ausgestattet ist. Dies bietet Vorteile bezüglich der Herstellungskosten der Sitzschale.

Gemäß einer weiteren vorteilhaften Weiterbildung des Verfahrens strömt bei dem Monosandwich-Verfahren, mittels welchem die Rückseite des Trägers im Schritt c) mit dem Kunststoffmaterial umspritzt wird, die Schmelze durch eine Düse aus dem Nebenextruder vor eine geschlossene Rückströmsperre der Spritzeinheit und drückt die bereits plastifizierte Kunststoffschmelze und die Schnecke gegen einen einstellbaren Staudruck zurück, bis der eingestellte Dosierweg erreicht wird. Dies erlaubt einen besonders gleichmäßigen Aufbau der im Monosandwich-Verfahren erzeugten Schichten der Sitzschale.

Gemäß einer bevorzugten Ausführungsform wird in Schritt c) an der Rückseite des Trägers ein Schalenkörper ausgeformt bzw. ausgebildet, der zusammen mit dem Träger und der Kunststoff-Folie eine Sitzschale für einen Stuhl bildet. Zur Ausbildung des Stuhls können an der Sitzschale somit ein oder mehrere Stuhlbeine befestigt werden. Weitere Montage-Schritte zum Zusammenbau eines solchen Stuhls sind bei dieser Ausführungsform nicht erforderlich.

Zweckmäßig erfolgt das Umspritzen gemäß Schritt c) derart, dass beim Umspritzen gemäß Schritt c) mittels eines Spritzwerkzeugs eine Kunststoffschmelze aus Kunststoffmaterial auf die Rückseite des Trägers gespritzt wird. Diese Kunststoffschmelze erhitzt und schmilzt beim Auftreffen auf den Träger das Kunststoffmaterial des Trägers, sodass dieses unter Ausbildung des Schalenkörpers mit der eingespritzten Kunststoffschmelze verschmilzt.

Gemäß einer vorteilhaften Weiterbildung weist die Vorderseite des in Schritt a) bereitgestellten Trägers mit der Kunststoff-Folie nach dem Tiefziehen gemäß Schritt b) zumindest in zwei orthogonal zueinander verlaufenden Richtungen eine gekrümmte dreidimensionale Oberflächenkontur auf. Eine solche "zweifache" Krümmung entspricht den für Sitzschalen moderner Stühle bevorzugt verwendeten Geometrien. Insbesondere kann auf diese Weise die charakteristische schalenförmige Geometrie einer solchen Sitzschale realisiert werden.

Gemäß einer anderen vorteilhaften Weiterbildung entspricht die in Schritt b) vorgegebene dreidimensionale Oberflächenkontur der Vorderseite des Trägers mit der Kunststoff-Folie der dreidimensionalen Oberflächenkontur eines Formbodens, der einen Formhohlraum begrenzt, in welchen der Träger mit der Kunststoff-Folie zum Umspritzen gemäß Schritt c) eingebracht wird. Diese Maßnahme erlaubt es, Träger mit verschiedensten geometrischen Formgebungen bzw. Oberflächenkonturen zur Ausbildung als Sitzschale mit einem Kunststoffmaterial zu umspritzen.

Besonders zweckmäßig wird die auf der Vorderseite des Trägers angeordnete Kunststoff-Folie zum Umspritzen gemäß Schritt c) flächig auf dem Formboden zur Anlage gebracht.

Gemäß einer vorteilhaften Weiterbildung wird vorgeschlagen, die Kunststoff-Folie während des Umspritzens elektrostatisch am Formboden zu fixieren. Mittels dieser Maßnahme wird verhindert, dass zwischen dem Formboden und der Kunststoff-Folie Zwischenräume gebildet werden, welche beim Umspritzen auf unerwünschte Weise mit Kunststoffschmelze gefüllt werden, so dass sie die Kunststoff-Folie bedecken.

Gemäß einer besonders bevorzugten Ausführungsform wird für den Träger und für das Umspritzen des Trägers dasselbe Kunststoffmaterial verwendet. Eine solche einheitliche Materialwahl unterstützt das Verschmelzen des in das Spritzwerkzeug eingespritzten Kunststoffmaterials mit dem Kunststoffmaterial des Trägers. Außerdem ergibt sich für die gebildete Sitzschale ein einheitliches äußeres Erscheinungsbild.

Besonders zweckmäßig kann für den Träger sowie, alternativ oder zusätzlich, für das Umspritzen des Trägers als Kunststoffmaterial Polypropylen verwendet werden.

Zweckmäßig wird zum Umspritzen ein flächig ausgebildeter Träger mit einer Trägerdicke zwischen 0,3 mm und 0,7mm verwendet. Ein solcher Träger besitzt die erforderliche Stabilität, um eine Beschädigung der Kunststoff-Folie - insbesondere durch mechanische Deformation des Trägers vor und während des Umspritzens des Trägers - auszuschließen.

Besonders bevorzugt erfolgt das Umspritzen des Trägers mit Kunststoffmaterial zur Ausbildung des Schalenkörpers derart, dass der am Träger ausgeformte Schalenkörper eine Körperdicke zwischen 4,5 mm und 8mm besitzt. Auf diese Weise wird durch das Umspritzen eine Sitzschale geschaffen, welche die zur Verwendung als Teil eines Stuhls erforderliche Festigkeit auf.

Die Erfindung betrifft ferner eine Sitzschale für einen Stuhl, welche mittels des voranstehend erläuterten Verfahrens hergestellt wurde. Die Vorteile des voranstehend erläuterten Verfahrens übertragen sich daher auch auf die erfindungsgemäße Sitzschale.

Die Erfindung betrifft außerdem eine Sitzschale für einen Stuhl, welche einen Träger aus Kunststoffmaterial umfasst, auf dessen Vorderseite eine Kunststoff-Folie angeordnet ist. Erfindungsgemäß ist an der Rückseite des Trägers integral ein Schalenkörper aus Kunststoffmaterial ausgeformt.

Gemäß einer bevorzugten Ausführungsform weist die Vorderseite des Trägers mit der Kunststoff-Folie zumindest in zwei orthogonal zueinander verlaufenden Richtungen eine gekrümmte Oberflächenkontur auf.

Bevorzugt bestehen der Träger und der Schalenkörper aus demselben Kunststoffmaterial oder aus verschiedenen Kunststoffmaterialien.

Besonders bevorzugt weist der Träger eine Trägerdicke zwischen 0,3 mm und 0,7 mm auf. Eine derart festgelegte Trägerdicke ist ausreichend, um die zum Tragen der Kunststoff-Folie erforderliche Stabilität zu gewährleisten.

Besonders bevorzugt der Schalenkörper eine Körperdicke zwischen 4,5 mm und 8 mm auf. Auf diese Weise ist sichergestellt, dass die den Schalenkörper umfassende Sitzschale die für eine Verwendung als Teil eines Stuhls erforderliche mechanische Stabilität besitzt.

Die Erfindung betrifft außerdem einen Stuhl mit einer voranstehend vorgestellten erfindungsgemäßen Sitzschale, die eine Sitzfläche oder/und eine Rückenlehne des Stuhls bildet. Ferner umfasst der Stuhl wenigstens einen, vorzugsweise vier, an der Sitzschale befestigte(n) Stuhlbein(e).

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: in stark vereinfachter Darstellung einen Träger mit einer Kunststoff-Folie, welcher unter Verwendung des erfindungsgemäßen Verfahrens umspritzt werden soll,
- Fig. 2: in stark vereinfachter Darstellung ein Spritzwerkzeug, in welchem das Umspritzen des Trägers mit der Kunststoff-Folie erfolgt,
- Fig. 3: eine den Aufbau der mittels des Verfahrens hergestellten Sitzschale illustrierende Darstellung,
- Fig. 4: ein Beispiel für einen die erfindungsgemäße Sitzschale verwendenden Stuhl.

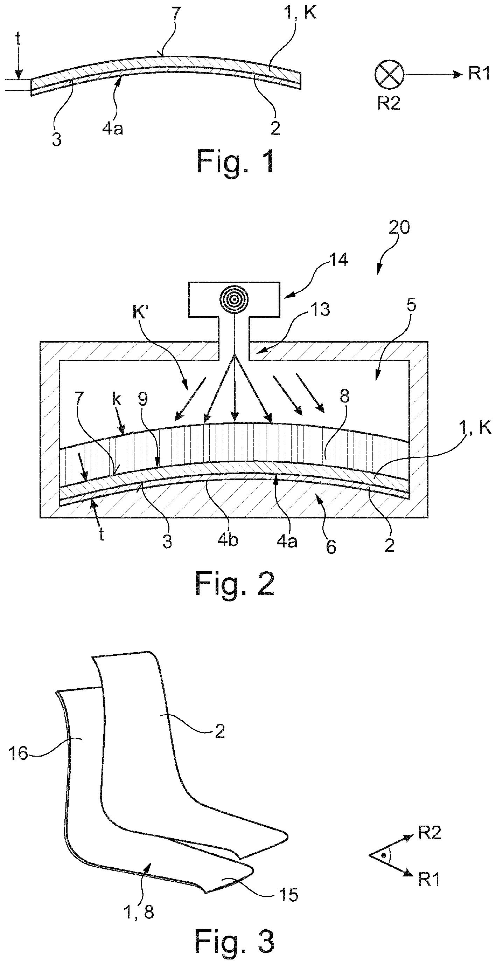

Anhand der Figur 1 wird im Folgenden das erfindungsgemäße Verfahren beispielhaft erläutert. Demnach wird gemäß einem ersten Verfahrensschritt a) ein Träger 1 aus einem Kunststoffmaterial K bereitgestellt. Zweckmäßig wird ein flächig bzw. plattenartig ausgebildeter Träger 1 mit einer Trägerdicke t zwischen 0,3 mm und 0,7 mm verwendet. Im Beispiel der Figuren beträgt die Trägerdicke t ca. 0,55 mm.

Wie Figur 1 erkennen lässt, ist auf einer Vorderseite 3 des Trägers 1 eine Kunststoff-Folie 2 angeordnet. Gemäß einem zweiten Verfahrensschritt b) wird der Träger 1 einschließlich der Kunststoff-Folie 2 mittels eines geeigneten Tiefziehwerkzeugs (in Figur 1 der Übersichtlichkeit halber nicht gezeigt) derart tiefgezogen, dass die Vorderseite 3 des Trägers 1 mit der Kunststoff-Folie 2 nach dem Tiefziehen eine vorgegebene dreidimensionale Oberflächenkontur 4a aufweist.

Die Figur 1 zeigt den Träger 1 mit der Kunststoff-Folie 2 nach dem Tiefziehen in einer Schnittdarstellung. Nach dem Tiefziehen weist die Vorderseite 3 des Trägers 1 und somit auch die Kunststoff-Folie 2 in zwei sich orthogonal zueinander erstreckenden Richtungen R1, R2 eine gekrümmte Oberflächenkontur 4a auf. Da die Richtung R2 im Beispiel der Figuren senkrecht zur Papierebene verläuft, ist die vorderseitige Krümmung der Oberflächenkontur 4a des Trägers 1 mit der Kunststoff-Folie 2 entlang dieser Richtung R2 in Figur 1 nicht zu erkennen.

Gemäß Figur 2 wird der Träger 1 mit der Kunststoff-Folie 2 nach dem Tiefziehen in ein Spritzwerkzeug bzw. Spritzgießwerkzeug 20 eingebracht, welches hierfür einen Formhohlraum 5 aufweist, in welchem der Träger 1 mit der Kunststoff-Folie 2 angeordnet wird. Der Formhohlraum 5 wird bodenseitig durch einen Formboden 6 begrenzt. Die in Schritt b) vorgegebene dreidimensionale Oberflächenkontur 4a der Vorderseite 3 des Trägers 1 mit der Kunststoff-Folie 2 entspricht dabei bevorzugt einer dreidimensionalen Oberflächenkontur 4b des den Formhohlraum begrenzenden Formbodens 6. Die Oberflächenkontur 4b des Formbodens 6 und die Oberflächenkontur 4a der Vorderseite 3 des Trägers 1 sind also aufeinander abgestimmt.

Zum Umspritzen gemäß Schritt c) werden die auf der Vorderseite 3 des Trägers 1 angeordnete Kunststoff-Folie 2 und somit auch der Träger 1 selbst flächig auf dem Formboden 6 des Formhohlraums 5 zur Anlage gebracht. Da die Oberflächenkontur 4a, 4b von Formboden 6 und Träger 1 aufeinander abgestimmt sind, bildet sich beim Anordnen der Kunststoff-Folie 2 auf dem Formboden 6 kein Zwischenraum zwischen der Kunststoff-Folie 2 und dem Formboden aus. Für den nun folgenden Spritzvorgang können die Kunststoff-Folie 2 und somit auch der Träger 1 elektrostatisch am Formboden 6 fixiert werden.

Gemäß Schritt c) wird mittels des Spritzwerkzeugs 20 eine der Vorderseite 3 gegenüberliegende Rückseite 7 des Trägers mit einem Kunststoffmaterial K' umspritzt. Hierzu wird in bekannter Weise Kunststoffmaterial K' aus einer Düse 13 des Spritzwerkzeugs 20 in den Formhohlraum 5 eingespritzt. Zweckmäßig werden für den in Schritt a) bereitgestellten Träger 1 und für das Umspritzen des Trägers 1 gemäß Schritt c) identische Kunststoffmaterialien K, K' verwendet, also K=K'. Denkbar ist aber auch die Verwendung verschiedener Kunststoffmaterialen K, K' für den in Schritt a) bereitgestellten Träger 1 und für das Umspritzen des Trägers 1 gemäß Schritt c). Zweckmäßig kann für den Träger 1 und für das Umspritzen des Trägers 1 Polypropylen als Kunststoffmaterial K, K' verwendet werden.

Beim Umspritzen gemäß Schritt c) wird mittels des Spritzwerkzeugs 20 eine Kunststoffschmelze 9 aus dem Kunststoffmaterial K' auf die Rückseite 7 des Trägers 1 gespritzt, sodass die Kunststoffschmelze 9 mit dem Träger 1 verschmilzt. Auf diese Weise wird an der Rückseite 7 des Trägers 1 ein Schalenkörper 8 ausgeformt bzw. ausgebildet, der zusammen mit dem Träger 1 und der Kunststoff-Folie eine Sitzschale 12 für einen Stuhl 10 (in Figur 2 nicht gezeigt) ausbildet.

In einer Variante kann das Umspritzen gemäß dem sog. "Monosandwichverfahren" erfolgen, bei welchem das Spritzwerkzeug 20 mit einer Standard-Spritzgießmaschine mit einem Nebenextruder in wahlweise vertikaler oder horizontaler Anordnung ausgestattet ist (in Figur 2 nicht näher dargestellt). Zuerst wird die Kernkomponente in einer in Figur 2 nur grobschematisch angedeuteten Spritzeinheit 14 des Spritzwerkzeugs 10 plastifiziert. Anschließend dosiert der Nebenextruder die Hautkomponente in einen Schneckenvorraum der Spritzeinheit. Die Schmelze strömt durch die Düse 13 aus dem Nebenextruder vor die geschlossene Rückströmsperre (nicht gezeigt) der Spritzeinheit 14 und drückt die bereits plastifizierte Kunststoffschmelze und die Schnecke gegen einen einstellbaren Staudruck zurück, bis der eingestellte Dosierweg erreicht wird. Dabei werden die im Zylinder befindlichen Materialien nicht vermischt, sondern lagern räumlich hintereinander im Schneckenvorraum. Beim Einspritzen fließen so die beiden Materialien zwangsläufig nacheinander in die Kavität, was zur Folge hat, dass sich die zuerst einfließende Kunststoff-Komponente als Haut-Komponente an die Rückseite 7 des Trägers 1 anlegt, während die nachfolgende Kunststoff-Komponente dann den Kern des Schalenkörpers 8 bildet.

Die Figur 3 illustriert den Aufbau einer Sitzschale 12, die mittels des voranstehend erläuterten erfindungsgemäßen Verfahrens hergestellt wurde. Demnach umfasst die Sitzschale 12 den Träger 2, auf dessen Rückseite 7 der Schalenkörper 8 integral ausgeformt ist. Die Sitzschale 12 bildet im Beispiel der Figur 3 sowohl eine Sitzfläche 15 als auch eine Rückenlehne 16 eines Stuhls 10 aus. Gemäß Figur 3 ist die Kunststoff-Folie 2 auf der Vorderseite 3 des Trägers 1 angeordnet. Der besseren Darstellung halber ist in Figur 3 die Kunststoff-Folie 2 im Abstand zum Träger 1 dargestellt. Selbstredend liegt die Kunststoff-Folie 1 flächig auf der Vorderseite 3 des Trägers 1 an.

Wie Figur 3 veranschaulicht, weist der Träger 1 mit der Kunststoff-Folie 2 in zwei orthogonal zueinander verlaufenden Richtungen R1, R2 eine gekrümmte Oberflächenkontur 4a auf. Der Träger 1 kann eine senkrecht zu der von der Sitzschale gebildeten Sitzfläche gemessene Trägerdicke zwischen 0,3 mm und 0,7mm aufweisen. Im Beispiel der Figur 3 beträgt die Trägerdicke 0,55 mm. Der Schalenkörper 8 kann eine in derselben Richtung wie die Trägerdicke t gemessene Körperdicke k zwischen 10 mm und 20 mm aufweisen.

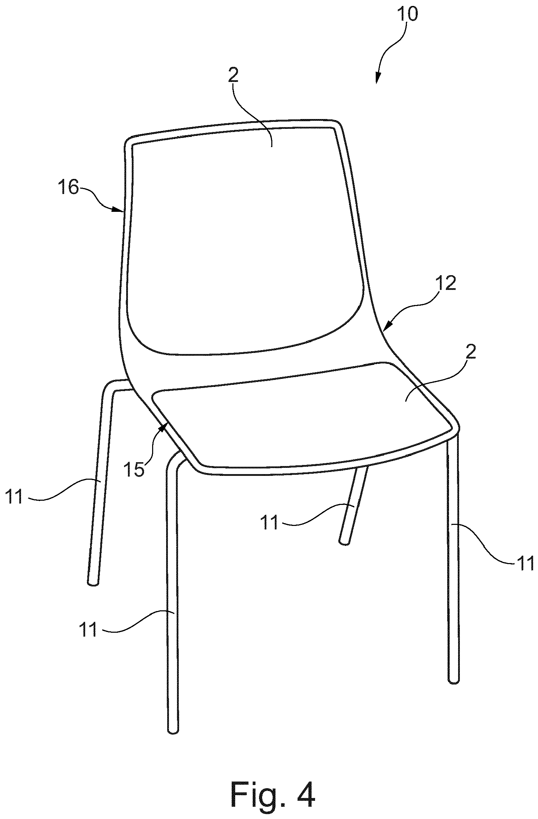

An der in Figur 3 gezeigten Sitzschale 12 können wie in Figur 4 dargestellt Stuhlbeine 11 montiert und auf diese Weise der Stuhl 10 fertiggestellt werden.

Weitere, zusätzliche Verfahrensschritte zur Herstellung des Stuhls 10 sind nicht erforderlich.

## Patentansprüche

1. Verfahren zum Herstellen einer Sitzschale (12) für einen Stuhl (10), umfassend die folgenden Schritte:
a) Bereitstellen eines Trägers (1) aus einem Kunststoffmaterial (K), auf dessen Vorderseite (3) eine Kunststoff-Folie (2) angeordnet ist,
b) Tiefziehen des Trägers (1) mit der Kunststoff-Folie (2) mittels eines Tiefziehwerkzeugs derart, dass die Vorderseite (3) des Trägers (1) mit der Kunststoff-Folie (2) nach dem Tiefziehen eine vorgegebene dreidimensionale Oberflächenkontur (4a) aufweist,
c) Umspritzen einer Rückseite (7) des Trägers (1) mit einem Kunststoffmaterial (K').

2. Verfahren nach Anspruch 1,
**dadurch gekennzeichnet, dass**
das Umspritzen in Schritt c) im Monosandwich-Verfahren erfolgt.

3. Verfahren nach Anspruch 2,
**dadurch gekennzeichnet, dass**
- bei dem Monosandwich-Verfahren, mittels welchem die Rückseite (7) des Trägers (1) im Schritt c) mit dem Kunststoffmaterial (K') umspritzt wird, zuerst eine Kernkomponente in einer Spritzeinheit (14) eines Spritzwerkzeugs (10) plastifiziert wird und anschließend eine Hautkomponente mittels eines Nebenextruders in einen Schneckenvorraum der Spritzeinheit (14) dosiert wird,
- wobei die im Zylinder befindlichen Materialien nicht vermischt werden, sondern räumlich hintereinander im Schneckenvorraum lagern, sodass beim Einspritzen die beiden Materialien zwangsläufig nacheinander in die Kavität fließen, sodass sich die zuerst einfließende Kunststoff-Komponente als Haut-Komponente an die Rückseite (7) des Trägers (1) anlegt und die nachfolgende Kunststoff-Komponente den Kern eines Schalenkörpers (8) bildet.

4. Verfahren nach Anspruch 2 oder 3,
**dadurch gekennzeichnet, dass**
bei dem Monosandwich-Verfahren, mittels welchem die Rückseite (7) des Trägers (1) im Schritt c) mit dem Kunststoffmaterial (K') umspritzt wird, das Spritzwerkzeug (20) mit einer Standard-Spritzgießmaschine mit dem Nebenextruder in vertikaler oder horizontaler Anordnung ausgestattet ist.

5. Verfahren nach einem der Ansprüche 2 bis 4,
**dadurch gekennzeichnet, dass**
bei dem Monosandwich-Verfahren, mittels welchem die Rückseite (7) des Trägers (1) im Schritt c) mit dem Kunststoffmaterial (K') umspritzt wird, die Schmelze durch eine Düse (13) aus dem Nebenextruder vor eine geschlossene Rückströmsperre der Spritzeinheit (14) geführt wird und die bereits plastifizierte Kunststoffschmelze und die Schnecke gegen einen einstellbaren Staudruck zurück drückt, bis der eingestellte Dosierweg erreicht wird.

6. Verfahren nach einem der vorhergehenden Ansprüche ,
**dadurch gekennzeichnet, dass**
durch das Umspritzen gemäß Schritt c) an der Rückseite (7) des Trägers (1) ein Schalenkörper (8) ausgeformt bzw. ausgebildet wird, der zusammen mit dem Träger (1) und der Kunststoff-Folie (2) eine Sitzschale (12) für einen Stuhl (10) ausbildet, an welcher Stuhlbeine (11) befestigt werden können.

7. Verfahren nach einem der vorhergehenden Ansprüche,
**dadurch gekennzeichnet, dass**
beim Umspritzen gemäß Schritt c) mittels eines Spritzwerkzeugs (20) eine Kunststoffschmelze (9) aus Kunststoffmaterial (K') auf die Rückseite (7) des Trägers (1) gespritzt wird, sodass die Kunststoffschmelze (9) mit dem Träger (1) verschmilzt.

8. Verfahren nach einem der vorhergehenden Ansprüche,
**dadurch gekennzeichnet, dass**
die Vorderseite (3) des in Schritt a) bereitgestellten Trägers (1) mit der Kunststoff-Folie (2) nach dem Tiefziehen gemäß Schritt b) zumindest in zwei orthogonal zueinander verlaufenden Richtungen (R1, R2) eine gekrümmte dreidimensionale Oberflächenkontur (4a) aufweist.

9. Verfahren nach einem der vorhergehenden Ansprüche,
**dadurch gekennzeichnet, dass**
die in Schritt b) vorgegebene dreidimensionale Oberflächenkontur (4a) der Vorderseite des Trägers (1) mit der Kunststoff-Folie (2) einer dreidimensionalen Oberflächenkontur (4b) eines Formbodens (6) entspricht, der einen Formhohlraum (5) begrenzt, in welchen der Träger (1) mit der Kunststoff-Folie (2) zum Umspritzen gemäß Schritt c) eingebracht wird.

10. Verfahren nach einem der vorhergehenden Ansprüche,
**dadurch gekennzeichnet, dass**
die auf der Vorderseite (3) des Trägers (1) angeordnete Kunststoff-Folie (2) zum Umspritzen gemäß Schritt c) flächig auf dem Formboden (6) zur Anlage gebracht wird.

11. Verfahren nach einem der vorhergehenden Ansprüche,
**dadurch gekennzeichnet, dass**
die Kunststoff-Folie (2) während des Umspritzens gemäß Schritt c) elektrostatisch am Formboden (6) fixiert wird.

12. Verfahren nach einem der vorhergehenden Ansprüche,
**dadurch gekennzeichnet, dass**
für den Träger (1) und für das Umspritzen des Trägers (1) dasselbe Kunststoffmaterial (K, K') oder verschiedene Kunststoffmaterialien (K, K') verwendet werden.

13. Verfahren nach einem der vorhergehenden Ansprüche,
**dadurch gekennzeichnet, dass**
für den Träger (1) oder/und für das Umspritzen des Trägers (1) Polypropylen als Kunststoffmaterial (K, K') verwendet wird.

14. Verfahren nach einem der vorhergehenden Ansprüche,
**dadurch gekennzeichnet, dass**
ein flächig ausgebildeter Träger (1) mit einer Trägerdicke (t) zwischen 0,3 mm und 0,7 mm, vorzugsweise von ca. 0,55 mm, verwendet wird.

15. Verfahren nach einem der vorhergehenden Ansprüche,
**dadurch gekennzeichnet, dass**
das Umspritzen gemäß Schritt c) derart erfolgt, dass der am Träger (1) ausgeformte Schalenkörper eine Körperdicke (k) zwischen 10 mm und 15 mm besitzt.

16. Sitzschale (12) für einen Stuhl(10),
hergestellt mittels des Verfahrens nach einem der vorhergehenden Ansprüche.

17. Sitzschale (12) für einen Stuhl (10), vorzugsweise nach Anspruch 16,
- mit einem Träger (1) aus einem Kunststoffmaterial (K), auf dessen Vorderseite (3) eine Kunststoff-Folie (2) angeordnet ist,
- mit einem integral an der Rückseite (7) des Trägers (1) ausgeformten Schalenkörper (8) aus Kunststoffmaterial (K').

18. Sitzschale nach Anspruch 16 oder 17,
**dadurch gekennzeichnet, dass**
die Vorderseite (3) des Trägers (1) mit der Kunststoff-Folie zumindest in zwei orthogonal zueinander verlaufenden Richtungen (R1, R2) eine gekrümmte Oberflächenkontur (4a) aufweist.

19. Sitzschale nach einem der Ansprüche 16 bis 18,
**dadurch gekennzeichnet, dass**
der Träger (1) und der Schalenkörper (8) aus demselben Kunststoffmaterial (K, K') oder aus verschiedenen Kunststoffmaterialien (K, K') bestehen.

20. Sitzschale nach einem der Ansprüche 16 bis 19,
**dadurch gekennzeichnet, dass**
der Träger (1) eine Trägerdicke (t) zwischen 0,3 mm und 0,7mm, vorzugsweise von ca. 0,55 mm, aufweist.

21. Sitzschale nach einem der Ansprüche 16 bis 20,
**dadurch gekennzeichnet, dass**
der Schalenkörper (8) eine Körperdicke (k) zwischen 10 mm und 15 mm aufweist.

22. Stuhl (10),
- mit einer Sitzschale (12) nach einem der Ansprüche 16 bis 21, die eine Sitzfläche (15) oder/und eine Rückenlehne (16) des Stuhls (10) bildet,
- mit wenigstens einem, vorzugsweise vier, an der Sitzschale (12) befestigte(n) Stuhlbein(en).
